# FASCICULE DE BREVET EUROPEEN

(11) **EP 2 508 042 B1**
(45) Date de publication et mention de la délivrance du brevet: **28.10.2020**
(21) Numéro de dépôt: 10801622.1
(22) Date de dépôt: 02.12.2010
(51) Int. Cl.: H05B 3/84

(54) **VITRAGE A FILS CONDUCTEURS INTEGRES PAR ULTRASONS**
GLASPLATTE MIT ULTRASCHALLINTEGRIERTEN LEITERDRÄHTEN
GLASS PANEL HAVING ULTRASONICALLY INTEGRATED CONDUCTING WIRES

(30) Priorité: 04.12.2009 FR 0958663
(43) Date de publication de la demande: 10.10.2012
(73) Titulaire: SAINT-GOBAIN GLASS FRANCE, 92400 Courbevoie (FR)
(72) Inventeur: LAURENCOT, Laetitia, F-60280 Margny les Compiegne (FR); VERRAT-DEBAILLEUL, Adèle, F-60150 Villers sur Coudun (FR); SCHLARB, Andreas, 52134 Herzogenrath (DE); RATEICZAK, Mitja, 52146 Würselen (DE); DEGEN, Christoph, 52072 Aachen (DE)
(74) Mandataire: Saint-Gobain Recherche
(86) Numéro de dépôt international: PCT/FR2010/052598
(87) Numéro de publication internationale: WO 2011/067541

(56) Documents cités:
- EP-A2- 0 788 294
- WO-A1-03/026869
- WO-A1-2009/059980
- DE-A1- 3 506 011
- US-A- 3 440 408
- US-A1- 2006 011 598
- US-A1- 2006 278 803

## Description

L'invention a trait aux vitrages comportant des fils conducteurs, soit chauffants de désembuage/dégivrage, soit aptes à constituer une antenne, soit à alimenter un moteur d'essuie-glace, un feu stop, des leds, un capteur de pluie ... Le vitrage consiste alors notamment en une lunette arrière ou un pare-brise de véhicule automobile.

Le terme vitrage sous-entend essentiellement la réalisation de hautes performances optiques et de sécurité, satisfaisant aux différentes normes en vigueur dans le monde.

Le vitrage est organique, constitué de polymère tel que polycarbonate (PC), acrylique comme poly (méthacrylate de méthyle) (PMMA), polyester tel que poly(téréphtalate d'éthylène) (PET), polyoléfine telle que polyéthylène (PE), poly(chlorure de vinyle) (PVC), polyuréthane (PU), poly(vinylacétal) et en particulier poly(vinylbutyral) (PVB) - comme couche adhésive intercalaire dans un feuilleté -, résine ionomère ...., ou en verre minéral, par exemple silicosodocalcique.

Le vitrage est monolithique ou feuilleté, c'est-à-dire constitué de plusieurs feuilles reliées les unes aux autres par des couches adhésives intercalaires telles que PVB ou PU précités.

Il peut être simple ou multiple, c'est-à-dire comporter des lames isolantes de gaz sec.

Plusieurs procédés sont connus pour réaliser des lignes ou autres motifs conducteurs sur un vitrage.

On connaît des lignes sérigraphiées.

On connaît aussi l'insertion de fils conducteurs sur la couche adhésive intercalaire en PVB d'un vitrage feuilleté, en appliquant une certaine chaleur associée à une pression. Les fils conducteurs sont confinés entre les deux feuilles de verre. Cette technique est décrite dans les documents EP 553 025, EP 613 769.

On connaît aussi du document WO 2003 026 869 un procédé dans lequel des fils conducteurs sont insérés dans un film d'une première matière plastique, sur lequel on injecte une seconde matière plastique compatible avec ou identique à la première, de telle manière que les fils soient totalement encapsulés, noyés dans le produit final.

Ces techniques sont de mises en œuvre complexes, les procédés comportent de nombreuses étapes. Des difficultés de réalisation subsistent, en particulier sur des vitrages de géométries toujours plus complexes, à courbures très prononcées et/ou sphériques, notamment eu égard aux hautes performances optiques visées.

D'autre part, le document US 7 410 267 décrit l'insertion de fils chauffants sur un couvercle de phare en matière plastique transparente au moyen d'ultrasons. Cependant de hautes performances optiques ne sont pas requises, un tel couvercle étant au contraire conçu de conformation telle qu'on ne peut pas voir à travers lui sans déformation.

Le document WO 2009059980 décrit un vitrage dont la surface comprend une feuille de verre minéral et non un substrat en matériau polymère.

Le document US 2006278803 décrit un couvercle de phare en matériau polymère dans lequel un fil est enfoncé et recouvert par un revêtement de lissage nécessairement épais.

L'invention a donc pour but la mise à disposition d'un procédé simple et fiable de fabrication d'un vitrage à fils conducteurs et hautes performances optiques.

A cet effet, l'invention a pour objet une lunette arrière ou pare-brise de véhicule automobile comprenant un vitrage intégrant un fil conducteur, qui se distingue par le fait qu'une surface du vitrage comprend un substrat en matériau polymère dans lequel le fil conducteur est en partie enfoncé et tout au plus affleurant à la surface du matériau polymère, en ce que cet enfoncement est d'au moins 50 % du diamètre du fil, un revêtement de protection du vitrage comprenant une couche de 1,5-6 µm d'épaisseur de primaire et un vernis antirayure de 3,5-12 µm d'épaisseur, de type polysiloxane.

Par le fait que le fil conducteur est tout au plus affleurant à la surface du matériau polymère, on exclue, selon l'invention, qu'il soit totalement noyé dans celui-ci, c'est-à-dire recouvert de tous côtés d'une certaine épaisseur mesurable de celui-ci.

Il a en effet été trouvé qu'une disposition du fil conducteur en surface du vitrage et en telle excroissance ou tel affleurement, est parfaitement et simplement réalisable même avec des formes complexes de vitrage, et apte à garantir de hautes performances optiques.

Dans le cas du fil conducteur enfoncé en partie dans un substrat en matériau polymère, cet enfoncement est par exemple d'au plus 90, de préférence 85% du diamètre du fil.

A titre indicatif, un fil de tungstène de 35 µm de diamètre est en excroissance de 7 à 13 µm d'un substrat en polycarbonate, et un fil de cuivre de 71 µm de diamètre, de 19 à 34 µm.

De préférence, le fil conducteur forme, à la surface du vitrage, une surépaisseur d'au moins 3, de manière particulièrement préférée 5 µm.

Dans une première variante préférée, le fil conducteur est recouvert du revêtement de protection du vitrage, d'épaisseur au plus égale à 18 µm. Ce revêtement de protection peut consister en une couche améliorant la résistance mécanique du substrat en matériau polymère, en vernis antirayure de type polysiloxane et sa couche de primaire associée. L'épaisseur du vernis antirayure peut être de 3,5 - 12 µm, notamment environ 10 µm, celle du primaire de 1,5 - 6 µm, notamment environ 5 µm.

L'excroissance du fil conducteur par rapport au substrat en matériau polymère, d'une valeur d'au moins 10% du diamètre du fil comme vu ci-dessus, se retrouve donc avantageusement à la surface du produit final, constituée par exemple du vernis antirayure, sous forme d'une surépaisseur d'au moins 3 µm, comme déjà évoqué également.

Cependant, si le fil conducteur affleure à la surface du matériau polymère, le revêtement de protection/vernis antirayure qui la recouvre ne présente aucune surépaisseur, tout en restant également dans le cadre de l'invention.

Dans une seconde variante, le fil conducteur est exposé à l'environnement du vitrage. Il peut être notamment enfoncé en partie dans un substrat en matériau polymère à travers le revêtement antirayure de celui-ci. Cette réalisation n'exclut pas que le fil conducteur puisse être revêtu d'un résidu de revêtement tel qu'adhésif hot-melt transparent. Le fil conducteur peut d'autre part affleurer à la surface du revêtement antirayure de telle manière que la surface de celui-ci ne présente pratiquement aucune surépaisseur ou irrégularité.

Dans une troisième variante ne faisant pas partie de l'invention mais de l'état de la technique utile à la compréhension de l'invention, le fil conducteur est collé sur un substrat en verre minéral ou en matériau polymère. On peut imaginer un fil à section rectangulaire ou équivalente, dont seule la face en contact avec le substrat est initialement revêtue d'adhésif hot-melt transparent, de sorte que dans le produit final, le fil conducteur est réellement exposé à l'environnement du vitrage. Dans le cas d'un fil conducteur cylindrique initialement intégralement revêtu d'adhésif hot-melt, des résidus de ce dernier peuvent rester en tout point de la surface du fil dans le vitrage final.

Pour constituer le fil conducteur, on peut utiliser l'aluminium, du cuivre recouvert d'aluminium, des fils à haute résistance à l'arrachement, des alliages cuivre nickel, du laiton, de l'argent, de l'or, des alliages cuivre-étain, des alliages aluminium-magnésium, des fils recouverts d'un autre matériau, par exemple des fils de cuivre recouverts de nickel ou des fils peints en noir, de l'acier inoxydable. On peut utiliser un fil de section circulaire, ou un conducteur de section rectangulaire.

Des exemples préférés pour le fil conducteur sont :
- un fil en tungstène de diamètre compris entre 15 et 150 µm ;
- un fil en cuivre de diamètre compris entre 25 et 250 µm.

L'invention a aussi pour objet un procédé de fabrication d'un vitrage décrit ci-dessus, dans lequel le fil conducteur est intégré au vitrage en soumettant le fil conducteur et un matériau thermoplastique formant un substrat à l'action conjuguée d'ultrasons et d'une pression. Le fil conducteur est appliqué avec pression sur le substrat au moyen de la tête d'une sonotrode.

Lorsque le substrat est en matériau thermoplastique du type polycarbonate ou équivalent, ce matériau fond par l'action des ultrasons, et le fil est enfoncé dans le substrat en appliquant une pression.

Ce procédé mettant en œuvre des ultrasons est adapté à l'intégration de fils conducteurs sur des surfaces complexes, même à courbures prononcées, sphériques ...

Une sonotrode peut être portée à cette fin par un robot apte à intégrer le fil sur une surface complexe en trois dimensions en contrôlant la pression appliquée par la sonotrode sur cette surface.

Ce procédé pouvant être appliqué en finition de pièces intermédiaires de qualité contrôlée, les pertes de rendement sont minimales.

Le nombre d'étapes du procédé est diminué par rapport aux autres procédés connus.

Un autre objet de l'invention est l'application d'un vitrage décrit précédemment pour un véhicule de transport terrestre, aérien ou aquatique, en particulier comme vitrage de véhicule automobile, notamment lunette arrière à fonction de désembuage/dégivrage et/ou antenne, pour le bâtiment, le mobilier urbain (abribus, panneau d'affichage ...), l'aménagement intérieur (ameublement, paroi vitrée, doublage de paroi ...), l'électroménager ou l'électronique.

L'invention est illustrée en référence aux figures annexées, dans lesquelles
- les figures 1 et 2, respectivement 3 et 4 représentent schématiquement une première, respectivement une seconde variantes du vitrage de l'invention, vu en coupe,
- les figures 5a, respectivement 5b représentent schématiquement un fil conducteur vu en coupe transversale avant son association au vitrage, respectivement une troisième variante du vitrage de l'invention, également vu en coupe, ne faisant pas partie de l'invention mais de l'état de la technique utile à la compréhension de l'invention.

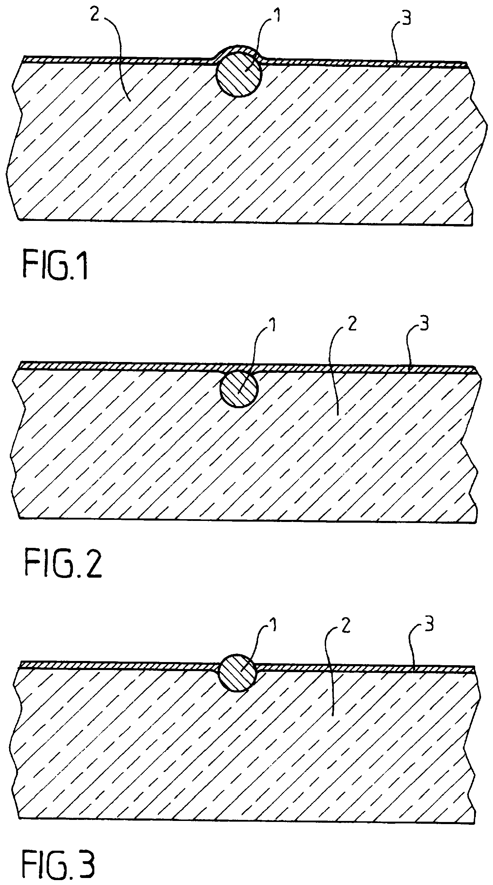

La figure 1 représente donc un fil conducteur 1 de tungstène de 35 µm de diamètre, respectivement de cuivre de 71 µm de diamètre, enfoncé d'une profondeur de 25 µm, respectivement de 46 µm, dans un vitrage 2 en polycarbonate.

En d'autres termes, le fil de tungstène ressort de 10 µm de la feuille de polycarbonate, et le fil de cuivre de 25 µm.

Cet enfoncement du fil est obtenu par ultrasons et application d'une pression.

La courbure de l'extrémité active arrondie de la sonotrode utilisée est choisie selon la courbure du substrat traité. La sonotrode est montée sur une tête appelée module lui-même monté sur un robot. Le module comprend un ressort dont la raideur détermine la pression appliquée par la sonotrode sur le substrat.

Le générateur a une fréquence de 30 kHz et une puissance de 1000 W adaptable selon la nécessité, ce qui confère à la sonotrode une certaine amplitude, préférentiellement 80 µm.

Un revêtement antirayure 3 comprenant une couche de 5 µm d'épaisseur de primaire et le revêtement lui-même de 10 µm d'épaisseur, consistant en polysiloxane, est ensuite appliqué.

La hauteur d'excroissance du fil mentionnée ci-dessus (10 µm, 25 µm) peut être diminuée à la surface du vitrage, après formation du vernis antirayure ; elle est de 6 µm pour le fil de tungstène, 17 µm pour le fil de cuivre.

Le vitrage de la figure 2 ne diffère de celui de la figure 1 que par le fait que le fil 1 affleure à la surface de polycarbonate 2.

Dans le vitrage de la figure 3, le fil 1 est inséré dans le vitrage 2 après application du vernis antirayure 3.

Le fil 1 ressort de 10 µm du vitrage dans le cas du fil de tungstène, de 25 µm dans le cas du fil de cuivre.

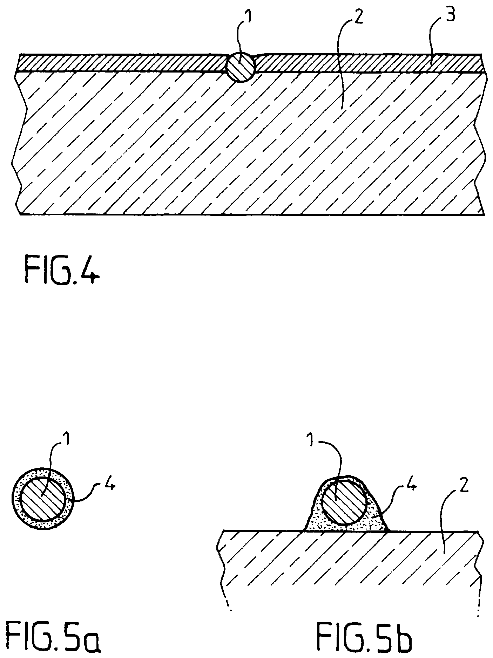

Le vitrage de la figure 4 ne diffère de celui de la figure 3 que par le fait que le fil 1 affleure à la surface du vernis antirayure 3.

Le fil 1 de la figure 5a est muni d'un revêtement 4 d'adhésif hot-melt transparent, afin d'être collé à un vitrage 2 en verre ou en matériau polymère, selon le même procédé que décrit en référence à la figure 1.

On obtient le vitrage représenté schématiquement à la figure 5b. Il n'y a pas ici d'insertion du fil dans le substrat.

On constate de manière qualitative l'absence de défaut optique pour les cinq vitrages représentés dans les figures 1, 2, 3, 4 et 5b, attestée par l'absence de distorsion optique en transmission observable par ombroscopie sous forme de taches blanches et quantifiable par mesure Labscan® (appareil commercialisé par la Société ISRA Vision).

On confirme l'absence de défaut optique des cinq vitrages à fils conducteurs intégrés en projetant à travers eux une mire lumineuse distante du vitrage de 4 m, et en observant l'ombre sur un écran situé à 4 m également. La mire lumineuse comporte des pois alignés et/ou lignes parallèles puis perpendiculaires aux fils conducteurs. Ces essais sont effectués selon le règlement N° 43 (annexe 3, § 9), additif 42, de l'accord E/ECE/324, E/ECE/TRANS/505, concernant l'adoption de prescriptions techniques uniformes applicables aux véhicules à roues, aux équipements et aux pièces susceptibles d'être montés ou utilisés sur un véhicule à roues et les conditions de reconnaissance réciproque des homologations délivrées conformément à ces prescriptions.

La mire n'est pas déformée par passage à travers les vitrages.

Ainsi a-t-on obtenu un vitrage équipé de fils conducteurs et à hautes performances optiques, par un procédé simple.

Ainsi a-t-on obtenu un vitrage équipé de fils conducteurs et à hautes performances optiques, par un procédé simple.

## Revendications

1. Lunette arrière ou pare-brise de véhicule automobile comprenant un vitrage intégrant un fil conducteur, **caractérisé en ce qu'**une surface du vitrage comprend un substrat en matériau polymère dans lequel le fil conducteur est en partie enfoncé et tout au plus affleurant à la surface du matériau polymère, **en ce que** cet enfoncement est d'au moins 50 % du diamètre du fil, et un revêtement de protection du vitrage comprenant une couche de 1,5-6 µm d'épaisseur de primaire et un vernis antirayure de 3,5-12 µm d'épaisseur, de type polysiloxane.

2. Lunette arrière ou pare-brise de véhicule automobile selon la revendication 1, **caractérisé en ce que** le fil conducteur forme, à la surface du vitrage, une surépaisseur d'au moins 3, de préférence 5 µm.

3. Lunette arrière ou pare-brise de véhicule automobile selon l'une des revendications précédentes, **caractérisé en ce que** le fil conducteur est recouvert du revêtement de protection du vitrage, d'épaisseur au plus égale à 18 µm.

4. Lunette arrière ou pare-brise de véhicule automobile selon l'une des revendications précédentes, **caractérisé en ce que** le fil conducteur est exposé à l'environnement du vitrage.

5. Lunette arrière ou pare-brise de véhicule automobile selon l'une des revendications précédentes, **caractérisé en ce que** le fil conducteur est en tungstène et de diamètre compris entre 15 et 150 µm.

6. Lunette arrière ou pare-brise de véhicule automobile selon l'une des revendications 1 à 4 **caractérisé en ce que** le fil conducteur est en cuivre et de diamètre compris entre 25 et 250 µm.

7. Procédé de fabrication d'une lunette arrière ou d'un pare-brise de véhicule automobile selon l'une des revendications précédentes, **caractérisé en ce que** le fil conducteur est intégré au vitrage en soumettant le fil conducteur et un matériau thermoplastique formant un substrat à l'action conjuguée d'ultrasons et d'une pression.

## Patentansprüche

1. Heckscheibe oder Windschutzscheibe eines Kraftfahrzeugs, welche eine Glasscheibe umfasst, in die ein Leiterdraht integriert ist, **dadurch gekennzeichnet, dass** eine Oberfläche der Glasscheibe ein Substrat aus Polymermaterial umfasst, in welches der Leiterdraht teilweise eingesenkt ist und höchstens bündig mit der Oberfläche des Polymermaterials abschließt, dadurch, dass diese Einsenkung mindestens 50 % des Durchmessers des Drahtes beträgt, und eine Schutzbeschichtung der Glasscheibe, die eine Primerschicht von 1,5-6 µm Dicke und einen Kratzschutzlack von 3,5-12 µm Dicke vom Typ Polysiloxan umfasst.

2. Heckscheibe oder Windschutzscheibe eines Kraftfahrzeugs nach Anspruch 1, **dadurch gekennzeichnet, dass** der Leiterdraht an der Oberfläche der Glasscheibe eine Verdickung von mindestens 3, vorzugsweise 5 µm bildet.

3. Heckscheibe oder Windschutzscheibe eines Kraftfahrzeugs nach einem der vorhergehenden Ansprüche, **dadurch gekennzeichnet, dass** der Leiterdraht von der Schutzbeschichtung der Glasscheibe bedeckt wird, mit einer Dicke, die höchstens 18 µm beträgt.

4. Heckscheibe oder Windschutzscheibe eines Kraftfahrzeugs nach einem der vorhergehenden Ansprüche, **dadurch gekennzeichnet, dass** der Leiterdraht der Umgebung der Glasscheibe ausgesetzt ist.

5. Heckscheibe oder Windschutzscheibe eines Kraftfahrzeugs nach einem der vorhergehenden Ansprüche, **dadurch gekennzeichnet, dass** der Leiterdraht aus Wolfram besteht und einen Durchmesser zwischen 15 und 150 µm aufweist.

6. Heckscheibe oder Windschutzscheibe eines Kraftfahrzeugs nach einem der Ansprüche 1 bis 4, **dadurch gekennzeichnet, dass** der Leiterdraht aus Kupfer besteht und einen Durchmesser zwischen 25 und 250 µm aufweist.

7. Verfahren zur Herstellung einer Heckscheibe oder Windschutzscheibe eines Kraftfahrzeugs nach einem der vorhergehenden Ansprüche, **dadurch gekennzeichnet, dass** der Leiterdraht in die Glasscheibe integriert wird, indem der Leiterdraht und ein thermoplastisches Material, das ein Substrat bildet, der kombinierten Wirkung von Ultraschall und einem Druck ausgesetzt werden.

## Claims

1. Motor vehicle rear window or windscreen comprising glazing integrating a conducting wire, **characterized in that** a surface of the glazing comprises a substrate made of a polymer material in which the conducting wire is partly sunken and at the very most flush with the surface of the polymer material, **in that** this sinking is at least 50% of the diameter of the wire, and a coating protecting the glazing comprising a layer 1.5-6 µm thick of primer and a scratch-resistant varnish 3.5-12 µm thick, of polysiloxane type.

2. Motor vehicle rear window or windscreen according to Claim 1, **characterized in that** the conducting wire forms, at the surface of the glazing, an overthickness of at least 3 µm, preferably 5 µm.

3. Motor vehicle rear window or windscreen according to either of the preceding claims, **characterized in that** the conducting wire is covered with the coating protecting the glazing, having a thickness at most equal to 18 µm.

4. Motor vehicle rear window or windscreen according to one of the preceding claims, **characterized in that** the conducting wire is exposed to the environment of the glazing.

5. Motor vehicle rear window or windscreen according to one of the preceding claims, **characterized in that** the conducting wire is made of tungsten and has a diameter of between 15 and 150 µm.

6. Motor vehicle rear window or windscreen according to one of Claims 1 to 4, **characterized in that** the conducting wire is made of copper and has a diameter of between 25 and 250 µm.

7. Process for manufacturing a motor vehicle rear window or windscreen according to one of the preceding claims, **characterized in that** the conducting wire is integrated into the glazing by subjecting the conducting wire and a thermoplastic material forming a substrate to the combined action of ultrasonication and pressure.
